# EUROPÄISCHE PATENTSCHRIFT

(11) **EP 4 070 440 B1**
(45) Veröffentlichungstag und Bekanntmachung des Hinweises auf die Patenterteilung: **27.05.2026**
(21) Anmeldenummer: 20804438.8
(22) Anmeldetag: 06.11.2020
(51) Int. Cl.: H02K 7/14, H02K 11/21, H02K 9/06

(54) **ELEKTROMOTOR MIT LÜFTERHAUBE UND RELATIV ZUR LÜFTERHAUBE DREHBAR GELAGERTER ROTORWELLE UND WINKELSENSOR**
ELECTRIC MOTOR HAVING A FAN GUARD AND ROTOR SHAFT MOUNTED ROTATABLY RELATIVE TO THE FAN GUARD AND ANGLE SENSOR
MOTEUR ÉLECTRIQUE AYANT UNE PROTECTION DE VENTILATEUR ET UN ARBRE DE ROTOR MONTÉ ROTATIF PAR RAPPORT À LA PROTECTION DE VENTILATEUR ET CAPTEUR D'ANGLE

(30) Priorität: 04.12.2019 DE 102019008414
(43) Veröffentlichungstag der Anmeldung: 12.10.2022
(73) Patentinhaber: SEW-EURODRIVE GmbH & Co. KG, 76646 Bruchsal (DE)
(72) Erfinder: ZIMMERMANN, Andreas, 76227 Karlsruhed (DE); KNAUS, Thomas, 76698 Zeutern (DE)
(86) Internationale Anmeldenummer: PCT/EP2020/025499
(87) Internationale Veröffentlichungsnummer: WO 2021/110283

(56) Entgegenhaltungen:
- EP-A1- 2 113 989
- DE-A1- 102012 004 459
- DE-A1- 102012 024 811
- TWK ELEKTRONIK: "Stator coupling / torque support Model series ZMS58 ? Stator coupling / torque support for coupling a", 16 January 2017 (2017-01-16), XP055769987, Retrieved from the Internet <URL:https://www.twk.de/data/pdf/12939_e0.pdf> [retrieved on 20210128]

## Beschreibung

Die Erfindung betrifft einen Elektromotor mit Lüfterhaube und relativ zur Lüfterhaube drehbar gelagerter Rotorwelle und Winkelsensor.

Es ist allgemein bekannt, dass ein Winkelsensor zur Erfassung der Winkellage der Rotorwelle an einem Elektromotor anordenbar ist.

**Aus der** EP 2 113 989 A1 **ist als nächstliegender Stand der Technik eine Drehmomentstütze zur Befestigung des Gehäuses eines Drehgebers an einem Elektromotor bekannt.**

**Aus** dem Produktdatenblatt "Stator coupling / torque support Model series ZMS58" der Firma TWK-Elektronik GmbH, veröffentlicht am 16.01.2017 (XP 055769987), **sind in Umfangsrichtung mäandrierende Stege einer Drehmomentstütze bekannt.**

**Aus der** DE 10 2012 024811 A1 **ist ein Elektromotor mit Lüfterhaube und Sensor bekannt.**

**Aus der** DE 10 2012 004459 A1 **ist ein Antrieb mit Drehmomentstütze zur axial und radial weniger als in Umfangsrichtung steifen Befestigung des Gehäuses eines Winkelsensors an einem Lüfterhaubengitter eines Elektromotors bekannt.**

Der Erfindung liegt daher die Aufgabe zugrunde, einen Elektromotor weiterzubilden, wobei die Herstellung einfach und kostengünstig ausführbar sein soll.

Erfindungsgemäß wird die Aufgabe bei dem Elektromotor nach den in Anspruch 1 angegebenen Merkmalen gelöst.

Von Vorteil ist dabei, dass mittels der Drehmomentstütze Toleranzen kompensierbar sind und trotzdem in Umfangsrichtung eine steife Anbindung erreichbar ist. Somit ist das Gehäuse des Winkelsensors möglichst drehfest mit der Lüfterhaube verbunden und leitet somit Reaktionsmomente ab.

In axialer und in radialer Richtung sind mittels der Drehmomentstütze Toleranzen von Bauteilen einfach kompensierbar. Somit sind kostengünstige Bauteile einfach, also ohne besonderen Aufwand, herstellbar und zusammensetzbar.

**Erfindungsgemäß** ist das Gehäuse mit einem Innenring der Drehmomentstütze mittels eines ersten und mittels eines zweiten Verbindungsbereichs der Drehmomentstütze verbunden. Von Vorteil ist dabei, dass ein flächiges Anliegen des Innenrings erreicht ist und somit die Verbindungsebene am Gehäuse des Winkelsensors ausgerichtet ist.

**Erfindungsgemäß** weist die Drehmomentstütze, insbesondere nach radial außen hervorragende, Laschenbereiche auf, mit denen die Lüfterhaube verbunden ist. Von Vorteil ist dabei, dass ein flächiges Anliegen an der Lüfterhaube erreichbar ist und somit die zugehörige Verbindungsebene an der Lüfterhaube, insbesondere am Lüftergitter der Lüfterhaube, ausgerichtet ist. Fertigungstoleranzen sind mittels der Drehmomentstütze ausgleichbar.

**Erfindungsgemäß** ist ein jeweiliger Laschenbereich mittels Stegen mit dem Innenring verbunden. Von Vorteil ist dabei, dass die Drehmomentstütze die Laschenbereiche auf größerem Radialabstandsbereich aufweist als der Innenring, so dass die Stege diesen radialen Abstand überbrücken. Vorzugsweise ist ein jeweiliger Steg aber nicht im selben Umfangswinkelbereich mit dem Innenring verbunden, in welchem er mit dem jeweiligen Laschenbereich verbunden ist. Somit ist der Mäander effizienter anordenbar. Denn vom Verbindungsbereich startet der Mäander mit seiner ersten Schlinge tangential oder in Umfangsrichtung und mündet nach mehreren Schlingen ebenfalls tangential oder in Umfangsrichtung in einen der Laschenbereiche.

Bei einer vorteilhaften Ausgestaltung ist der jeweilige Laschenbereich mittels eines jeweiligen Befestigungsmittels, insbesondere Schraube, an die Lüfterhaube angedrückt. Von Vorteil ist dabei, dass das Befestigungsmittel durch eine Ausnehmung im Laschenbereich und durch eine Gitteröffnung des Lüftergitters der Lüfterhaube hindurchragt und beim Aufschrauben einer Mutter dann beidseitig andrückend wirkt, also den Laschenbereich an die Lüfterhaube andrückt insbesondere formschlüssig sichert.

Bei einer vorteilhaften Ausgestaltung wird der Innenring und/oder die Verbindungsbereiche von einer Schraube an das Gehäuse des Winkelsensors angedrückt. Von Vorteil ist dabei, dass eine einfache Befestigung erreichbar ist.

Bei einer vorteilhaften Ausgestaltung sind die Laschenbereiche von dem Innenring und von den Verbindungsbereichen radial beabstandet,
wobei die radiale Richtung auf die Drehachse der Rotorwelle bezogen ist. Von Vorteil ist dabei, dass der Mäander mit seiner ersten und letzten Schlinge tangential oder in Umfangsrichtung gerichtet ausformbar ist.

Bei einer vorteilhaften Ausgestaltung ist der jeweilige Verbindungsbereich vom jeweiligen Laschenbereich in Umfangsrichtung beabstandet. Von Vorteil ist dabei, dass der Mäander mit seiner ersten und letzten Schlinge tangential oder in Umfangsrichtung in den Verbindungsbereich beziehungsweise in den Laschenbereich mündet.

Bei einer vorteilhaften Ausgestaltung ist der auf die Drehachse der Welle bezogene, vom Steg überdeckte Radialabstandsbereich zwischen dem von den Laschenbereichen überdeckten Radialabstandsbereich und dem von den Verbindungsbereichen überdeckten Radialabstandsbereich angeordnet oder überlappt mit diesen. Von Vorteil ist dabei, dass der Steg die Verbindung ausführt. Vorzugsweise münden je zwei der Stege in einen jeweiligen Laschenbereich und an ihrem anderen Ende in einem der Verbindungsbereiche. Dabei sind die Stege voneinander in Umfangsrichtung beabstandet.

Bei einer vorteilhaften Ausgestaltung ist die Rotorwelle mittels eines in einem Lagerflansch des Elektromotors aufgenommenen Lagers drehbar gelagert,
wobei die Lüfterhaube mit dem Lagerflansch verbunden ist, insbesondere am Lagerflansch befestigt ist. Von Vorteil ist dabei, dass das Reaktionsmoment des Gehäuses des Winkelsensors über die Drehmomentstütze und die Lüfterhaube zum Lagerflansch ableitbar ist. Hingegen ist die Rotorwelle des Elektromotors mit der Welle des Winkelsensors verbunden.

Bei einer vorteilhaften Ausgestaltung weist der Winkelsensor eine relativ zum Gehäuse des Winkelsensors drehbare Welle aufweist, die drehfest mit der Rotorwelle verbunden ist. Von Vorteil ist dabei, dass die Winkellage der Rotorwelle erfassbar ist.

Bei einer vorteilhaften Ausgestaltung ist die Drehmomentstütze als eben ausgeführtes Stanzblech ausgebildet, wobei die Normale der das Stanzblech enthaltenden Ebene parallel zur Drehachse der Rotorwelle ausgerichtet ist. Von Vorteil ist dabei, dass in Umfangsrichtung, also mit einer Drehbewegung innerhalb der Ebene, eine hohe Steifigkeit erreichbar ist.

Bei einer vorteilhaften Ausgestaltung liegen die Laschenbereiche parallel am Lüftergitter der Lüfterhaube an. Von Vorteil ist dabei, dass eine in Umfangsrichtung steife Ausführung erreichbar ist und Torsionssteifigkeit der Drehmomentstütze auch mit einer entsprechend torsionssteifer Lüfterhaube verbindbar ist.

Bei einer vorteilhaften Ausgestaltung ist das Gehäuse des Winkelsensors auf der vom Lagerflansch abgewandten Seite der Lüfterhaube angeordnet. Von Vorteil ist dabei, dass der Winkelsensor an der von der Rotorwelle abgewandten Seite hervorragt.

Weitere Vorteile ergeben sich aus den Unteransprüchen. Für den Fachmann ergeben sich innerhalb des durch den unabhängigen Anspruch definierten Schutzbereichs weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

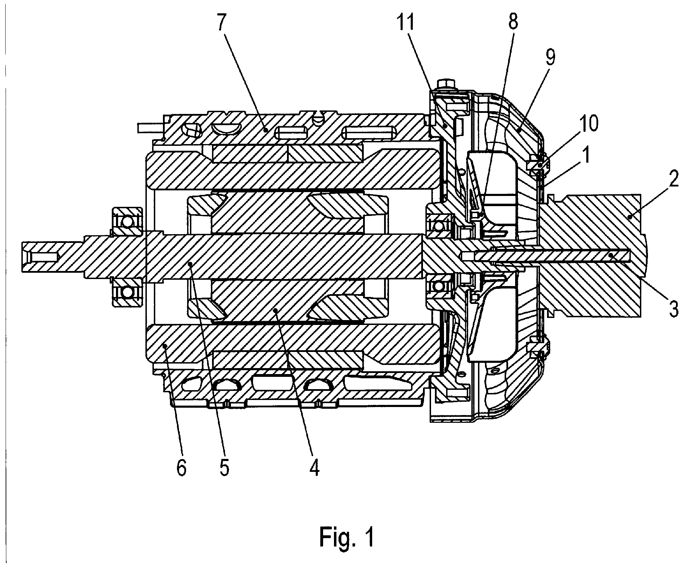

In der Figur 1 ist eine Schnittansicht durch einen erfindungsgemäßen Elektromotor dargestellt, welcher einen Winkelsensor zur Erfassung der Rotorlage der Rotorwelle des Elektromotors aufweist.
In der Figur 2 ist eine Drehmomentstütze, die einerseits mit dem Gehäuse 2 des Winkelsensors und andererseits mit einer Lüfterhaube 9 des Elektromotors verbunden ist, in Schrägansicht dargestellt.
In der Figur 3 ist eine zur Figur 2 gehörige Draufsicht auf die Drehmomentstütze dargestellt.
In der Figur 4 ist der Elektromotor explodiert in Schrägansicht dargestellt.
In der Figur 5 ist der Winkelsensor und die Lüfterhaube 9 vom Gehäuseteil 7 des Elektromotors explodiert dargestellt, wobei die Drehmomentstütze 1 mittels Schrauben 42 mit der Lüfterhaube 9 drehfest verbunden ist.

Wie in den Figuren dargestellt, weist der erfindungsgemäße Elektromotor eine drehbar gelagerte Rotorwelle 5 auf, auf welche ein Aktivteil 4 aufgesteckt und drehfest verbunden ist, insbesondere wobei das Aktivteil 4 abhängig von der Ausführung des Elektromotors als Asynchronmotor oder Synchronmotor einen Kurzschlusskäfig oder Dauermagnete aufweist.

Zumindest eines der die Rotorwelle 5 drehbar lagernden Lager ist in einem Lagerflansch 11 aufgenommen, der mit einem Gehäuseteil 7 lösbar, insbesondere aber drehfest, verbunden ist. Radial innerhalb des Gehäuseteils 7 ist eine Statorwicklung 6 angeordnet und mit dem Gehäuseteil 7 drehfest verbunden.

Auf der von der Statorwicklung 6 abgewandten Seite des Lagerflansches 11 ist am Lagerflansch 11 eine Lüfterhaube 9 befestigt, welche einen mit der Rotorwelle 5 drehfest verbundenen Lüfter 8 radial umgibt.

Die Lüfterhaube 9 weist zwar ein Lüftergitter, insbesondere also in einem Gitter angeordnete durchgehende Ausnehmungen, auf, so dass der vom Lüfter geförderte Luftstrom durch das Lüftergitter hindurchführbar ist. Andererseits führt die Lüfterhaube 9 eine Schutzfunktion aus, indem die Berührung drehbar gelagerter Teile für Menschen verhindert ist.

Die Lüfterhaube 9 ist entweder aus Kunststoff als Kunststoffspritzgussteil hergestellt oder aus metallischem Blech als Stanz-Biegeteil.

Ein Winkelsensor zur Erfassung der Winkellage der Rotorwelle 5 weist eine Welle 3 auf, die relativ zu einem Gehäuse 2 des Winkelsensors drehbar ist, insbesondere relativ drehbar gelagert, ist zu einem Gehäuse 2 des Winkelsensors.

Das Gehäuse 2 des Winkelsensors ist mit einer Drehmomentstütze 1 verbunden, welche mit der Lüfterhaube 9 verbunden ist.

Diese Drehmomentstütze 1 ist derart ausgeführt, dass die Drehmomentstütze 1 gegen eine bezogen auf die Rotorwelle 5 in Umfangsrichtung gerichtete Verdrehung zwischen Gehäuseteil 2 des Winkelsensors und Lüfterhaube 9, insbesondere also gegen eine Torsionsartige Verdrehung, eine höhere Steifigkeit vorhanden ist als gegen eine axial gerichtete Verschiebung und auch gegen eine radial gerichtete Verschiebung.

Auf diese Weise sind Fertigungstoleranzen der Bauteile, beispielsweise der Lüfterhaube zusammen mit dem Lagerflansch 11 und/oder der Rotorwelle 5 zusammen mit der Welle 3 des Winkelsensors, ausgleichbar. Insbesondere führen Toleranzen in der axialen Ausdehnung oder in axialer Richtung zu einer axialen Fehlpositionierung des Gehäuses 2, welche jedoch ausgleichbar ist durch die in axialer Richtung wenig steife Drehmomentstütze 1.

Die Drehmomentableitung ist davon nicht beeinflussbar, da die Torsionssteifigkeit der Drehmomentstütze 1 sehr hoch ist und somit das Gehäuse 2 genügend drehfest über die Lüfterhaube 9 mit dem Lagerflansch verbunden ist.

Die Welle 3 des Winkelsensors ist drehfest mit der Rotorwelle 5 verbunden. Vorzugsweise wird hierzu eine kraftschlüssige Verbindung wie beispielsweise Spreizwellenverbindung oder Konuswellenverbindung eingesetzt.

Der Winkelsensor erzeugt ein Sensorsignal, das die Winkelstellung der Rotorwelle 5 relativ zum Gehäuseteil 7 codiert. Der Winkelsensor ist entweder nach einem magnetischen oder nach einem optischen Wirkprinzip ausgeführt.

Das im Lagerflansch 11 aufgenommene Lager der Rotorwelle 5 ist vorzugsweise als Festlager ausgeführt. Sogar eine Ausführung als Loslager ist ermöglicht, da die Drehmomentstütze 1 das Gehäuse des Winkelsensors mit der Lüfterhaube 9 koppelt.

Die Drehmomentstütze 1 liegt an einem vorzugsweise eben ausgeführten Lüftergitter der Lüfterhaube 9 an und ist mit zumindest einem Befestigungsmittel 10, insbesondere Schraube mit Mutter, an der Lüfterhaube 9 drehfest befestigt.

Axial zwischen Gehäuse 2 und dem Festlager ist ein Wellendichtring im Lagerflansch aufgenommen, der den Lagerflansch zur Rotorwelle 5 hin abdichtet. Hierzu steht die Dichtlippe des Wellendichtrings auf der Rotorwelle 5 an und berührt diese.

Die Drehmomentstütze 1 weist an ihrem radial äußeren Rand nach radial außen hervorstehende Laschenbereiche 22 auf, durch welche jeweils eines der Befestigungsmittel 10, insbesondere Schraube, geführt ist, das auch durch das Gitter der Lüfterhaube 9 hindurchragt, insbesondere so dass der Schraubenkopf des vorzugsweise als Schraube ausgeführten Befestigungsmittels 10 und eine auf einen Gewindebereich des Befestigungsmittels 10 aufgeschraubte Mutter die Drehmomentstütze 1 an die Lüfterhaube 9 andrücken.

Die Drehmomentstütze 1 weist an ihrem radial inneren Endbereich einen Innenring 23 auf, der über vorzugsweise vier mäandrierend ausgeführte Stege 24 mit den Laschenbereichen 22 verbunden ist.

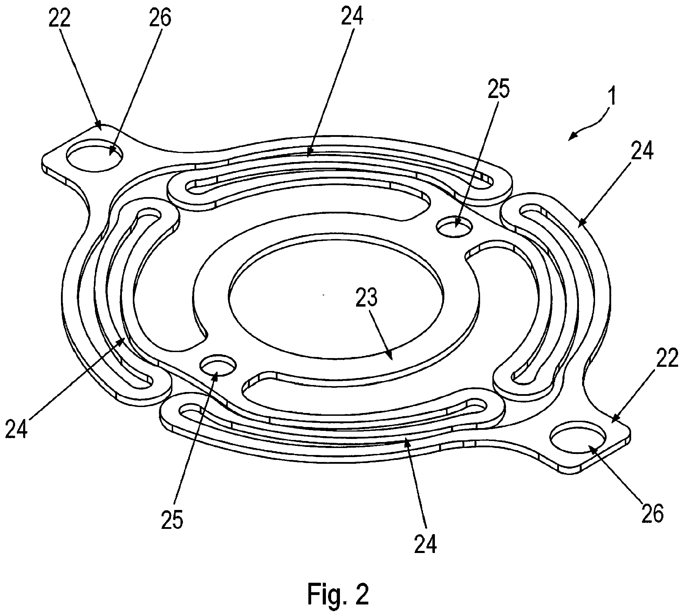

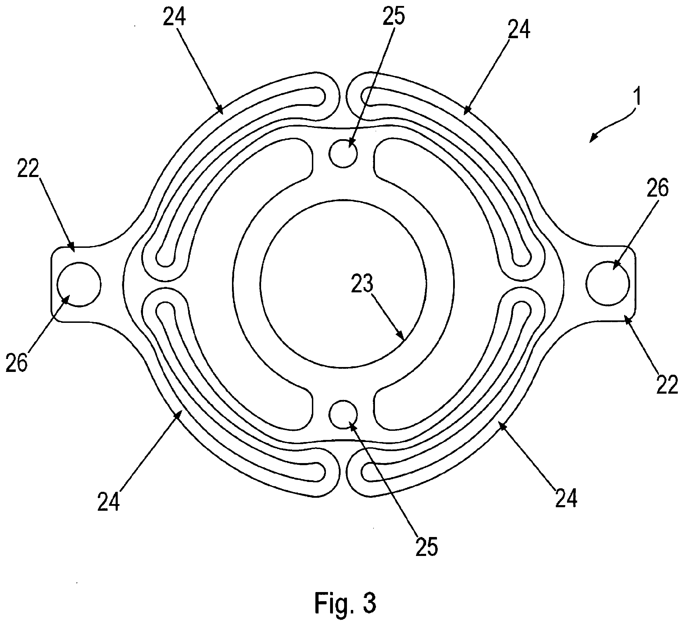

Hierbei sind bei der in Figur 2 und 3 gezeigten bevorzugten Ausführungsform zwei der Stege 24 mit dem Innenring 23 in einem ersten Verbindungsbereich, der einen ersten Umfangswinkelbereich überdeckt, verbunden, wobei in diesem ersten Verbindungsbereich eine axial durchgehende Ausnehmung 25 angeordnet ist, durch welche ein weiteres Befestigungsmittel hindurchgeführt ist, welches die Drehmomentstütze 1 mit dem Gehäuse 2 des Winkelsensors verbindet, insbesondere an dieses andrückt. Das weitere Befestigungsmittel ist vorzugsweise wiederum als Schraubteil ausgeführt, dessen Schraubenkopf beim Einschrauben des Schraubteils in eine axial gerichtete Gewindebohrung des Gehäuses 2 die Drehmomentstütze 1 an das Gehäuse 2 andrückt.

Genauso ist am Innenring 23 diametral gegenüberstehend zum ersten Verbindungsbereich ein zweiter Verbindungsbereich ausgebildet, der einen zweiten Umfangswinkelbereich überdeckt, wobei in diesem zweiten Verbindungsbereich eine zweite axial durchgehende Ausnehmung 25 angeordnet ist, durch welche ein zweites weiteres Befestigungsmittel hindurchgeführt ist, welches ebenfalls die Drehmomentstütze 1 mit dem Gehäuse 2 des Winkelsensors verbindet, insbesondere an dieses andrückt. Das zweite weitere Befestigungsmittel ist vorzugsweise wiederum als Schraubteil ausgeführt, dessen Schraubenkopf beim Einschrauben des Schraubteils in eine weitere axial gerichtete Gewindebohrung des Gehäuses 2 die Drehmomentstütze 1 an das Gehäuse 2 andrückt.

Zwei der Stege 24 sind mit ihrem radial inneren Endbereich mit dem ersten Verbindungsbereich verbunden und mit ihrem radial äußeren Verbindungsbereich mit einem ersten der Laschenbereiche 22.

Zwei weitere der Stege 24 sind mit ihrem radial inneren Endbereich mit dem zweiten Verbindungsbereich verbunden und mit ihrem radial äußeren Verbindungsbereich mit einem zweiten der Laschenbereiche 22.

Der erste Laschenbereich 22 ist dem zweiten Laschenbereich 22 diametral gegenüber angeordnet, insbesondere also im Wesentlichen etwa 180° in Umfangsrichtung beabstandet.

Die mäandrierende Ausführung des jeweiligen Stegs 24 ist innerhalb der von der Drehmomentstütze 1, die vorzugsweise als Stanzblechteil ausgeführt ist, definierten Ebene angeordnet.

Der mäandrierende Bereich ist derart ausgeführt, dass mit zunehmendem Radialabstand ein erster der zwei Stege 24 zunächst einen bis zu einem Maximalwert zunehmenden Umfangswinkel aufweist und danach bis zu einem Minimalwert abnehmenden Umfangswinkel aufweist, worauf der Umfangswinkel dann wieder zunimmt, bis er den vom Laschenbereich 22 überdeckten Umfangswinkelbereich erreicht.

Bei weiteren erfindungsgemäßen Ausführungsbeispielen variiert der mäandrierende Verlauf des Stegs 24 mit zunehmendem Radialabstand zur Drehachse der Rotorwelle häufiger und erreicht entsprechend häufiger den Maximalwert oder Minimalwert.

Wie in Figur 2 und 3 dargestellt, ist der mäandrierende Verlauf des zweiten Stegs 24 der beiden Stege 24 in Umfangsrichtung spiegelsymmetrisch zur die Drehachse der Rotorwelle und den Mittelpunt der Ausnehmung 26 und/oder den Schwerpunkt des ersten Laschenbereichs 22, enthaltenden Ebene.

Vorzugsweise sind die beiden anderen Stege 24 ebenfalls spiegelsymmetrisch zu den vorgenannten Stegen 24 ausgeführt.

Da die Drehmomentstütze 1 als flaches und ebenes Stanzteil aus Blech hergestellt ist, liegt der jeweilige Mäander, also der jeweilige mäandriert ausgeführte Steg 24 in einer Ebene, deren Normalenrichtung parallel zur Drehachse der Rotorwelle ausgerichtet ist, und die Torsionssteifigkeit bezüglich einer auf die Drehachse bezogenen Torsion ist sehr hoch. Somit ist die Winkelerfassung mit dem Winkelsensor fehlerarm ausführbar.

In axialer Richtung ist eine Auslenkung der Laschenbereiche 22 relativ zur axialen Position des Innenrings 23 mit geringem Kraftaufwand ermöglicht, da die Drehmomentstütze 1 gegenüber solchen Auslenkungen keine hohe Steifigkeit aufweist. Somit sind Fertigungstoleranzen ausgleichbar, ohne dass die Winkelerfassung verschlechtert wird.

Ebenso sind radiale Abweichungen durch elastische Auslenkung der Laschenbereiche 22 relativ zum Innenring 23 aufnehmbar.

Die Stege 24 sind in Umfangsrichtung vorzugsweise voneinander regelmäßig beabstandet.

Vorzugsweise liegt der Innenring 23 am Gehäuse 2 des Winkelsensors an.

Jeder Steg 24 überdeckt, insbesondere mit seinem mäandrierenden Verlauf, einen Umfangswinkelbereich, welcher mehr als 60° überdeckt und insbesondere weniger als 90 ° ausgedehnt ist.

Zwischen Maximalwert und Minimalwert ist also ein Winkelabstand von mehr als 60° vorhanden, wobei der winkelabstand kleiner als 90°.

Die Stege 24 sind in Umfangsrichtung voneinander beabstandet.

Die Lüfterhaube 9 selbst, insbesondere das Gitter der Lüfterhaube 9, sind steifer ausgeführt als die Drehmomentstütze 1.

Der von den Stegen 24 überdeckte Radialabstandsbereich ist zwischen dem von dem Innenring 23 überdeckten Radialabstandsbereich angeordnet und dem von den Laschenbereichen 22 überdeckten Radialabstandsbereich angeordnet.

Der von dem ersten Laschenbereich 22 überdeckte Umfangswinkelbereich ist betragsmäßig mehr als 60° von dem vom ersten Verbindungsbereich überdeckten Umfangswinkelbereich beabstandet. Der von dem zweiten Laschenbereich 22 überdeckte Umfangswinkelbereich ist betragsmäßig mehr als 60° von dem vom ersten Verbindungsbereich überdeckten Umfangswinkelbereich beabstandet.

Somit ist eine optimierte Ausformung des Mäanders ermöglicht, also möglichst viele Mäanderschlingen auf geringem Radialabstandsbereich.

Entsprechend beträgt ein Winkel zwischen der die Schwerpunkte der beiden Laschenbereiche 22 verbindenden Verbindungslinie und der die Schwerpunkte der beiden Verbindungsbereiche verbindenden Verbindungslinie betragsmäßig mehr als 60°, insbesondere 90°.

Wenn vorzugsweise die beiden Verbindungslinien senkrecht zueinander ausgerichtet sind, ist eine hochgenaue Erfassung der Winkelwerte durch den Winkelsensor ermöglicht, da in Umfangsrichtung und entgegen der Umfangsrichtung die Torsionssteifigkeit denselben Werte, also keine Vorzugsrichtung, aufweist. Dies gilt auch bei Vorhandensein von axialen und radialen Toleranzabweichungen.

Die Drehmomentstütze 1, also ein Drehmomentstützteil, ist als Stanzteil einstückig und einteilig ausgeführt.

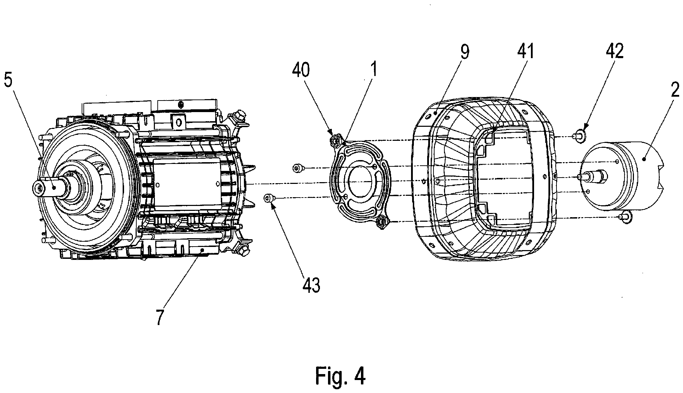

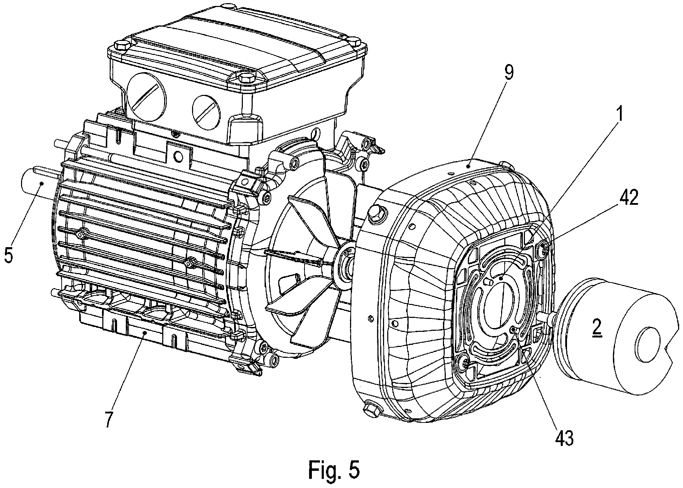

Wie aus Figur 4 und Figur 5 ersichtlich, sind auf der der Lüfterhaube 9 zugewandten Seite der Drehmomentstütze 1 Muttern 40 schweißverbunden. Somit sind die Muttern 40 stoffschlüssig mit der Drehmomentstütze 1 verbunden. Durch Ausnehmungen 41 der Lüfterhaube hindurchragende Schrauben 42 sind in die Muttern 40 eingeschraubt. Somit drückt der jeweilige Schraubenkopf der jeweiligen Schraube 42 die Lüfterhaube 9 auf die jeweilige Mutter 40 und somit ist die Drehmomentstütze mittels Schrauben 42 formschlüssig mit der Lüfterhaube 9 verbunden.

Das Gehäuseteil 2 des Winkelsensors ist mittels durch die Drehmomentstütze 1 durchgehender Stifte 43 in Umfangsrichtung formschlüssig, also drehfest, verbunden. Vorzugsweise sind die Stifte 43 kraftschlüssig in Bohrungen des Gehäuses 2 eingesteckt.

Da die Lüfterhaube 9 mit dem Gehäuseteil 7, insbesondere Statorgehäuse, mittels Schrauben ebenfalls formschlüssig verbunden ist, ist das Drehmoment vom Gehäuse 2 des Winkelsensors über die Drehmomentstütze 1 und über die Lüfterhaube 9 an das Gehäuseteil 7 abgeleitet.

Die Drehmomentstütze 1 ist also an der Innenseite der Lüfterhaube 9 angeordnet und somit geschützt von der Lüfterhaube 9 gegen Einwirkungen von der äußeren Umgebung.

### Bezugszeichenliste

1 Drehmomentstütze
2 Gehäuse, insbesondere Stator, des Winkelsensors
3 Welle, insbesondere Rotorwelle, des Winkelsensors
4 Aktivteil
5 Rotorwelle
6 Statorwicklung
7 Gehäuseteil
8 Lüfter
9 Lüfterhaube
10 Befestigungsmittel, insbesondere Schraube mit Mutter
11 Lagerflansch
22 Laschenbereich
23 Innenring
24 mäandrierend ausgeführter Steg
25 Ausnehmung
26 Ausnehmung
40 Mutter
41 Ausnehmung
42 Schraube
43 Stift

## Patentansprüche

1. Elektromotor mit Lüfterhaube (9) und relativ zur Lüfterhaube (9) drehbar gelagerter Rotorwelle (5) und Winkelsensor,
wobei ein Gehäuse (2) des Winkelsensors mit einer Drehmomentstütze (1) verbunden ist, die mit der Lüfterhaube (9) verbunden ist,
**dadurch gekennzeichnet, dass**
**das Gehäuse (2) mit einem Innenring (23) der Drehmomentstütze (1) mittels eines ersten und mittels eines zweiten Verbindungsbereichs der Drehmomentstütze (1) verbunden ist,**
**wobei die Drehmomentstütze (1), insbesondere nach radial außen hervorragende, Laschenbereiche (22) aufweist, mit denen die Lüfterhaube (9) verbunden ist,**
**wobei ein jeweiliger Laschenbereich (22) mittels Stegen der Drehmomentstütze (1) mit dem Innenring (23) verbunden ist,**
**wobei die Stege (24) in Umfangsrichtung voneinander beabstandet sind, wobei die Stege (24) derart mäandrierend und/oder mäanderartig ausgeformt sind,**
**dass die Stege (24)** mit zunehmendem Radialabstand zur Drehachse der Rotorwelle (5) mehrfach einen zunehmenden und danach abnehmenden Umfangswinkel aufweisen,
wobei jeder **der Stege (24)** in einem jeweiligen von ihm **überdeckten** Umfangswinkelbereich radial voneinander beabstandete Bereiche aufweist.

2. Elektromotor nach Anspruch 1,
**dadurch gekennzeichnet, dass**
der jeweilige Laschenbereich (22) mittels eines jeweiligen Befestigungsmittels, insbesondere Schraube, an die Lüfterhaube (9) angedrückt ist.

3. Elektromotor nach einem der vorangegangenen Ansprüche,
**dadurch gekennzeichnet, dass**
der Innenring (23) und/oder die Verbindungsbereiche von einer Schraube an das Gehäuse (2) des Winkelsensors angedrückt wird.

4. Elektromotor nach einem der vorangegangenen Ansprüche,
**dadurch gekennzeichnet, dass**
die Laschenbereiche (22) von dem Innenring (23) und von den Verbindungsbereichen radial beabstandet sind,
wobei die radiale Richtung auf die Drehachse der Rotorwelle (5) bezogen ist.

5. Elektromotor nach einem der vorangegangenen Ansprüche,
**dadurch gekennzeichnet, dass**
der jeweilige Verbindungsbereich vom jeweiligen Laschenbereich (22) in Umfangsrichtung beabstandet ist.

6. Elektromotor nach einem der vorangegangenen Ansprüche,
**dadurch gekennzeichnet, dass**
der auf die Drehachse der Welle (3) bezogene, vom Steg überdeckte Radialabstandsbereich zwischen dem von den Laschenbereichen (22) überdeckten Radialabstandsbereich und dem von den Verbindungsbereichen überdeckten Radialabstandsbereich angeordnet ist oder mit diesen überlappt.

7. Elektromotor nach einem der vorangegangenen Ansprüche,
**dadurch gekennzeichnet, dass**
die Rotorwelle (5) mittels eines in einem Lagerflansch (11) des Elektromotors aufgenommenen Lagers drehbar gelagert ist,
wobei die Lüfterhaube (9) mit dem Lagerflansch (11) verbunden ist, insbesondere am Lagerflansch (11) befestigt ist.

8. Elektromotor nach einem der vorangegangenen Ansprüche,
**dadurch gekennzeichnet, dass**
der Winkelsensor eine relativ zum Gehäuse (2) des Winkelsensors drehbare Welle (3) aufweist, die drehfest mit der Rotorwelle (5) verbunden ist.

9. Elektromotor nach einem der vorangegangenen Ansprüche,
**dadurch gekennzeichnet, dass**
die Drehmomentstütze (1) als eben ausgeführtes Stanzblech ausgebildet ist, wobei die Normale der das Stanzblech enthaltenden Ebene parallel zur Drehachse der Rotortwelle ausgerichtet ist.

10. Elektromotor nach einem der vorangegangenen Ansprüche,
**dadurch gekennzeichnet, dass**
die Laschenbereiche (22) parallel am Lüftergitter der Lüfterhaube (9) anliegen.

11. Elektromotor nach einem der vorangegangenen Ansprüche,
**dadurch gekennzeichnet, dass**
das Gehäuse (2) des Winkelsensors auf der vom Lagerflansch (11) abgewandten Seite der Lüfterhaube (9) angeordnet ist.

## Claims

1. Electric motor having a fan guard (9) and a rotor shaft (5) mounted rotatably relative to the fan guard (9) and an angle sensor,
wherein a housing (2) of the angle sensor is connected to a torque support (1), which is connected to the fan guard (9), **characterized in that**
the housing (2) is connected to an inner ring (23) of the torque support (1) by means of a first and a second connecting region of the torque support (1),
wherein the torque support (1) comprises tab regions (22), which in particular project radially outwards and to which the fan guard (9) is connected,
wherein a respective tab region (22) is connected to the inner ring (23) by means of webs of the torque support (1),
wherein the webs (24) are spaced apart from each other in the circumferential direction,
wherein the webs (24) are shaped in a meandering and/or meander-like manner such that the webs (24) have a circumferential angle that increases and then decreases multiple times as the radial distance from the axis of rotation of the rotor shaft (5) increases,
wherein each of the webs (24) has regions that are radially spaced apart from each other in a respective circumferential angle range covered by said web.

2. Electric motor according to claim 1,
**characterized in that**
the respective tab region (22) is pressed against the fan guard (9) by means of a respective fastener, in particular a screw.

3. Electric motor according to any one of the preceding claims,
**characterized in that**
the inner ring (23) and/or the connecting regions are pressed against the housing (2) of the angle sensor by a screw.

4. Electric motor according to any one of the preceding claims,
**characterized in that**
the tab regions (22) are radially spaced apart from the inner ring (23) and from the connecting regions,
the radial direction being relative to the axis of rotation of the rotor shaft (5).

5. Electric motor according to any one of the preceding claims,
**characterized in that**
the respective connecting region is spaced apart from the respective tab region (22) in the circumferential direction.

6. Electric motor according to any one of the preceding claims,
**characterized in that**
the radial distance range covered by the web, relative to the axis of rotation of the shaft (3), is arranged between the radial distance range covered by the tab regions (22) and the radial distance range covered by the connecting regions, or overlaps with these.

7. Electric motor according to any one of the preceding claims,
**characterized in that**
the rotor shaft (5) is rotatably mounted by means of a bearing accommodated in a bearing flange (11) of the electric motor, wherein the fan guard (9) is connected to the bearing flange (11), in particular is fastened to the bearing flange (11).

8. Electric motor according to any one of the preceding claims,
**characterized in that**
the angle sensor comprises a shaft (3) which is rotatable relative to the housing (2) of the angle sensor and which is co-rotatably connected to the rotor shaft (5).

9. Electric motor according to any one of the preceding claims,
**characterized in that**
the torque support (1) is embodied as a flat stamped sheet-metal part,
wherein the normal to the plane containing the stamped sheet-metal part is oriented parallel to the axis of rotation of the rotor shaft.

10. Electric motor according to any one of the preceding claims,
**characterized in that**
the tab regions (22) bear in a parallel manner against the fan grille of the fan guard (9).

11. Electric motor according to any one of the preceding claims,
**characterized in that**
the housing (2) of the angle sensor is arranged on the side of the fan guard (9) remote from the bearing flange (11).

## Revendications

1. Moteur électrique comportant un capot de ventilateur (9) et un arbre de rotor (5) monté de manière rotative par rapport au capot de ventilateur (9), ainsi qu'un capteur d'angle, le boîtier (2) du capteur d'angle étant relié à un support de couple (1), lequel est relié au capot de ventilateur (9), **caractérisé en ce que** le boîtier (2) est relié à une bague intérieure (23) du support de couple (1) au moyen d'une première et d'une seconde zone de liaison du support de couple (1), le support de couple (1) comportant, en particulier, des zones de languette (22) dépassant radialement vers l'extérieur, avec lesquelles le capot de ventilateur (9) est relié, chaque zone de languette (22) étant reliée à la bague intérieure (23) au moyen de nervures du support de couple (1), les nervures (24) étant espacées les unes des autres en direction circonférentielle, les nervures (24) étant formées de manière méandriforme et/ou méandrique, de sorte que les nervures (24), avec une distance radiale croissante par rapport à l'axe de rotation de l'arbre de rotor (5), comportent plusieurs fois un angle circonférentiel croissant puis décroissant, chaque nervure (24) comportant, dans une zone d'angle circonférentiel respective recouverte par elle, des zones espacées radialement les unes des autres.

2. Moteur électrique selon la revendication 1, **caractérisé en ce que**
chaque zone de languette (22) est pressée contre le capot de ventilateur (9) au moyen d'un moyen de fixation respectif, en particulier une vis.

3. Moteur électrique selon l'une des revendications précédentes, **caractérisé en ce que** la bague intérieure (23) et/ou les zones de liaison sont pressées contre le boîtier (2) du capteur d'angle par une vis.

4. Moteur électrique selon l'une des revendications précédentes, **caractérisé en ce que** les zones de languette (22) sont espacées radialement de la bague intérieure (23) et des zones de liaison, la direction radiale étant relative à l'axe de rotation de l'arbre de rotor (5).

5. Moteur électrique selon l'une des revendications précédentes, **caractérisé en ce que** chaque zone de liaison est espacée en direction circonférentielle de la zone de languette (22) respective.

6. Moteur électrique selon l'une des revendications précédentes, **caractérisé en ce que** la zone de distance radiale recouverte par la nervure, relative à l'axe de rotation de l'arbre (3), 5 est disposée entre la zone de distance radiale recouverte par les zones de languette (22) et la zone de distance radiale recouverte par les zones de liaison, ou chevauche celles-ci.

7. Moteur électrique selon l'une des revendications précédentes, **caractérisé en ce que** l'arbre de rotor (5) est monté de manière rotative au moyen d'un palier logé dans un flasque de palier (11) du moteur électrique, le capot de ventilateur (9) étant relié au flasque de palier (11), en particulier fixé au flasque de palier (11).

8. Moteur électrique selon l'une des revendications précédentes, **caractérisé en ce que** le capteur d'angle comporte un arbre (3) rotatif par rapport au boîtier (2) du capteur d'angle, lequel est relié de manière solidaire en rotation à l'arbre de rotor (5).

9. Moteur électrique selon l'une des revendications précédentes, **caractérisé en ce que** le support de couple (1) est formé comme une tôle découpée plane, la normale du plan contenant la tôle découpée étant orientée parallèlement à l'axe de rotation de l'arbre de rotor.

10. Moteur électrique selon l'une des revendications précédentes, **caractérisé en ce que** les zones de languette (22) sont en contact parallèle avec la grille de ventilateur du capot de ventilateur (9).

11. Moteur électrique selon l'une des revendications précédentes, **caractérisé en ce que** le boîtier (2) du capteur d'angle est disposé sur le côté du capot de ventilateur (9) opposé au flasque de palier (11).
